# EUROPEAN PATENT APPLICATION

(11) **EP 1 947 709 A1**
(43) Date of publication of application: **23.07.2008**
(21) Application number: 06820046.8
(22) Date of filing: 10.11.2006
(51) Int. Cl.: H01M 2/06, H01M 2/20, H01M 2/30

(54) **SEALED TERMINALS FOR BATTERIES**

(30) Priority: 18.11.2005 ES 200502836
(71) Applicant: Garcia Alberola E Hijos, S.L., 03680 Aspe (Alicante) (ES)
(72) Inventor: GARCIA ALBEROLA, José Maria, 03680 Aspe (Alicante) (ES)
(74) Representative: Esteban Perez-Serrano, Maria Isabel
(86) International application number: PCT/ES2006/070174
(87) International publication number: WO 2007/057495

(57) **Abstract**

The invention relates to sealed terminals for batteries of the type that are used as connection terminals in the electrical circuitry of a motor vehicle. The inventive terminals comprise an outer truncated-cone-shaped part, an inner part which is equipped with a ring labyrinth and stepped zones which are provided between said two parts. The terminals are **characterised by** the inclusion of at least one peripheral ring having a lower wall which is perpendicular to the axis of the terminal and having a smaller diameter than the stepped zone.

## Description

### OBJECT OF THE INVENTION

The present invention relates to sealed terminals for batteries, of among the terminals for connection of the electric circuitry of a motor vehicle, which comprise an external truncated conical part and an internal part which has a labyrinth of rings, there being a gradation between the two areas.

These terminals are characterized in the presence of at least one perimeter ring of which the internal face to the battery is perpendicular to the axis of the terminal and of greater diameter than the gradation.

### BACKGROUND OF THE INVENTION

Metallic terminals with plastic coating are very well known. These terminals have some aligned peripheral grooves, which impede the passage of the acid to the exterior of the battery.

Mentioned as a precedent is the Utility Model of the same applicant with N°1037580 "Sealed terminal for battery" in which the terminal is characterized by a perimeter groove, in contact with the intermediate gradation of the same, which impedes the upward passage of the acid via the periphery of the terminal.

Mention is also made as a precedent of the European Patent EP 0601268 "Battery Terminal" in which the terminal has a labyrinth below the gradation of the same, with grooves which cover the base in annular form and which alternate with rings having hook-shaped profiles.

However, it is habitual in the terminals for batteries on the market to find the presence of small filtrations of the acid coming from the battery which blacken the terminal causing the rejection of the same, and filtrations from the exterior of the battery to the interior thereof.

The present invention resolves this problem since it has at least one perimeter ring which allows the battery to be completely Sealed.

### DESCRIPTION OF THE INVENTION

The present invention comprises Sealed terminal for batteries, of among the terminals for connection of the electric circuitry of a motor vehicle, which comprise a truncated conical part external to the battery and a part internal thereto which has a labyrinth of rings, there being a gradation between the two areas.

These terminals are characterized in the presence of at least one perimeter ring of which the internal face to the battery is perpendicular to the axis of the terminal and of greater diameter than the gradation, which has a pointed profile which means that on embedding it in the plastic, the sealing action is greater than that which would be achieved with a curved profile.

This configuration allows the battery to be maintained Sealed both against the filtrations of the acid from the interior of the battery to the exterior and against the filtrations from the exterior thereof to the interior.

The perimeter ring can have diverse configurations which have been tested to verify their sealedness and which will be described in the preferred embodiment.

### DESCRIPTION OF THE DRAWINGS

The present descriptive specification is completed with a set of drawings, which illustrate without restricting the preferred embodiment of the invention.

Figure 1 is a view in elevation and in plan of the terminal with a perimeter ring of circular section and a truncated conical bottom coupling.

Figure 2 is a view in elevation and in plan of the terminal with a perimeter ring of circular section and a cylindrical bottom coupling.

Figure 3 is a view in elevation and in plan of the terminal with double lobed perimeter ring and a truncated conical bottom coupling.

Figure 4 is a view in elevation and in plan of the terminal with lobed double perimeter ring and a cylindrical bottom coupling.

Figure 5 is a view in perspective and in plan of the terminal with lobed perimeter ring.

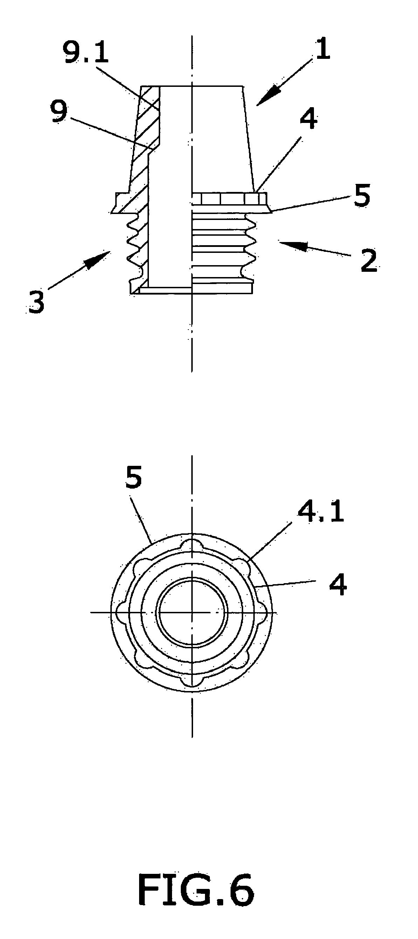

Figure 6 is a view in elevation of the terminal with internal rebate.

### PREFERRED EMBODIMENT OF THE INVENTION

The present invention comprises sealed terminal for batteries, of among the terminals for connection of the electric circuitry of a motor vehicle.

The terminals disclosed comprise a conical part (1) external to the battery and a part (2) internal thereto which has a labyrinth (3) of rings, there being a gradation (4) between the two areas (1, 2) a graduation (4). The terminal is characterized in having at least one perimeter ring (5) of which the internal face (5.1) to the battery is perpendicular to the axis of the terminal and which has a greater diameter than that of the gradation (4). The perimeter ring (5) has a pointed profile which achieves a better union between the terminal and the plastic in which it is embedded, this characteristic also favoring its Sealedness.

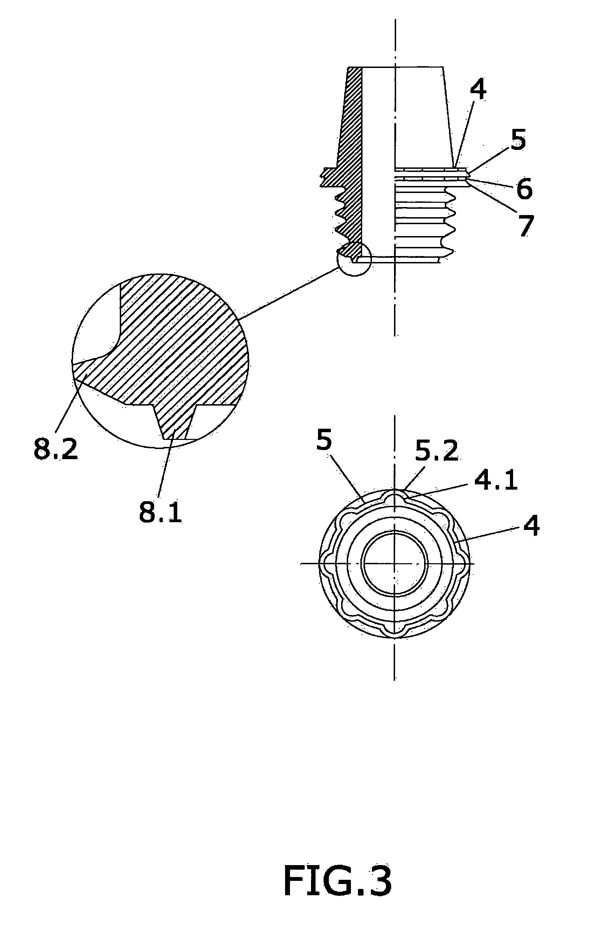

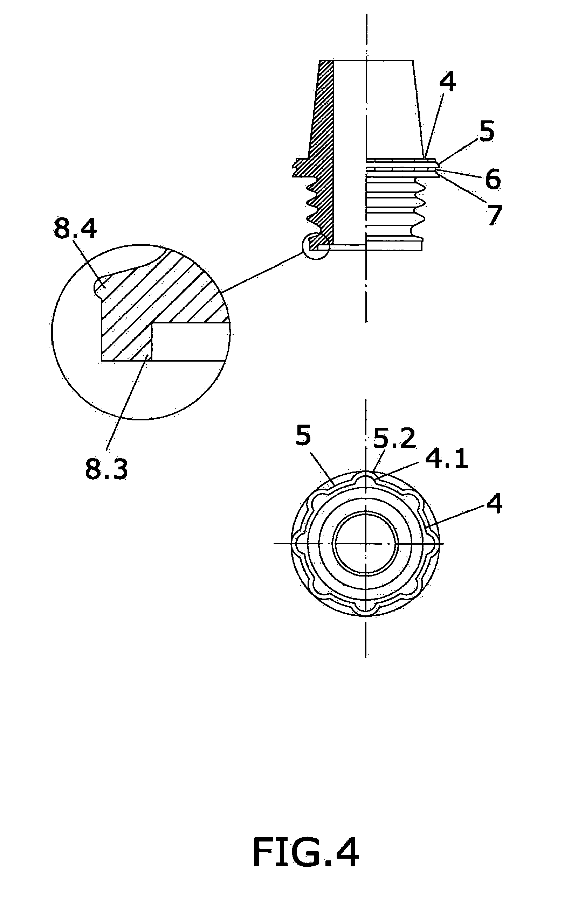

It is understood that, although an optimum solution exists derived from the tests which the different configurations of terminals have undergone, others can also be adopted which, although of differing effectiveness, are likewise object of this invention, for example, the use of two consecutive perimeter rings (5, 7) or the use of one lobe-shaped perimeter ring (5.2) which follows the profile of the gradation (4), as illustrated in figures 3 and 4. The perimeter ring (5) could be located at a different height in the area (2) internal to the battery, although in the preferred embodiment it is located in contact with the gradation (4). In figures 3 and 4 a configuration is shown in which two consecutive rings (5,7) are present, separated by a gradation (6) which has a configuration in equidistant lobes (5.2) and is parallel to that of the gradation (4).

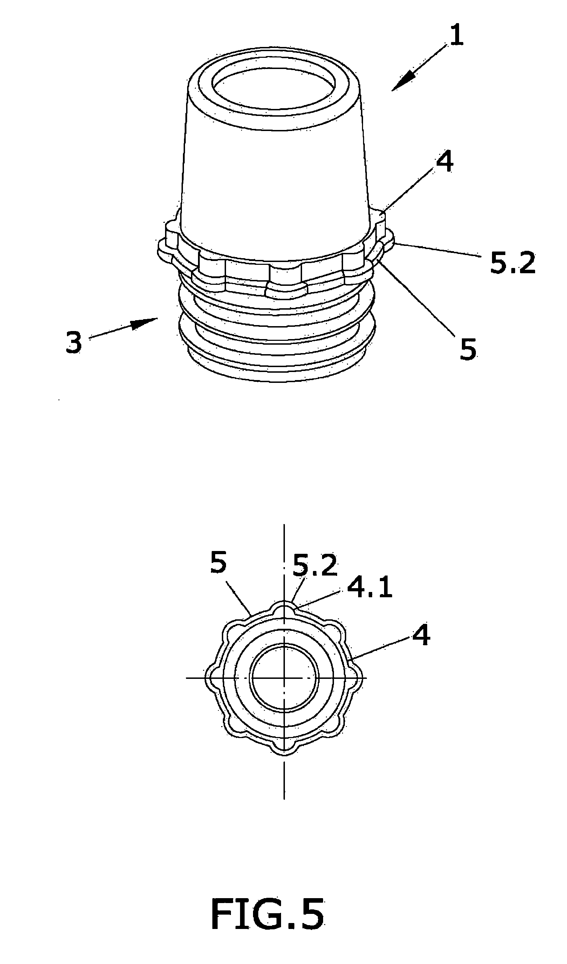

In figure 5 another preferred embodiment is shown in which there is only one perimeter ring (5), lobed (5.2), which has a straight profile instead of pointed as in the previous embodiments.

The different configurations of terminals have been subjected to the sealedness trial of the standard TL 825.06 of the Volkswagen group, as stated in point 7.6. thereof, "Terminals". The trial consists in immersing the battery in sulfuric acid of density 1.28 g/cm3, in a bath at 60°C during 24h, without the penetration of acid being appreciated into the labyrinth of the design disclosed.

Later they underwent a second trial under the same conditions lasting 168h (7 days) and, although in this second trial, a leakage of acid was admitted that could reach the first ring and blacken it, the result obtained was the non existence of any acid leakage whatsoever.

The rings (3.1) of the labyrinth (3) of the body (2), which have a cylindrical section, also have a pointed and not rounded termination, thereby assuring a better sealing of the terminal, as the contact is more effective between the terminal and the plastic in which it is embedded.

From the aforementioned trials, it was deduced that the configuration in which the ring (5) is lobed (5.2) has less sealedness than the terminals which have a ring (5) of circular section, because, in the area of smaller diameter, that is, that which coincides with the recesses of the lobes (5.2), small leaks can occur.

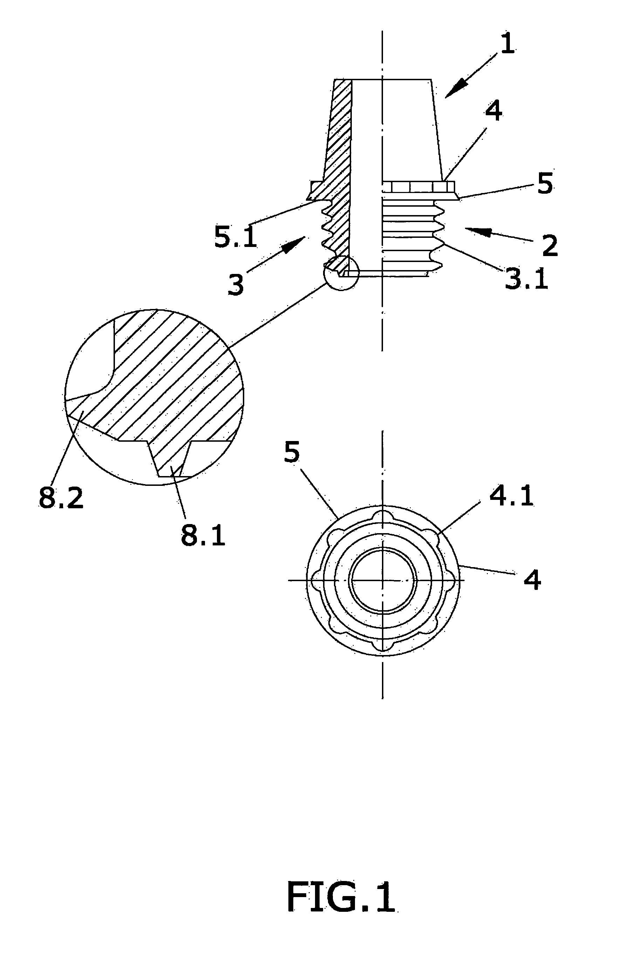

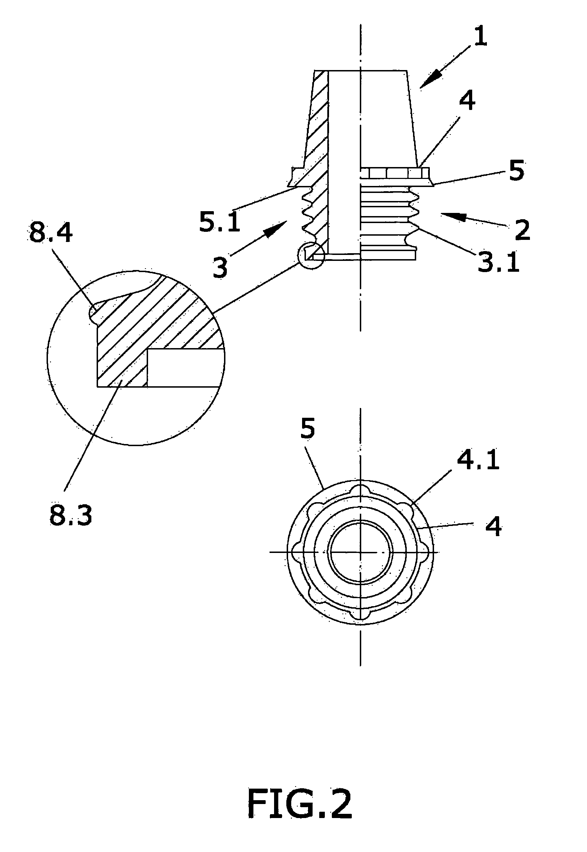

The bottom coupling of the terminals of the batteries can have different configurations, for example, a truncated conical termination (8.1) and a pointed perimeter ring (8.2), as seen in figures 1 and 3 and a second configuration which consists of a cylindrical coupling (8.3) combined with a perimeter projection (8.4) as appreciated in figures 2 and 4.

The terminals can also have an internal rebate (9) which provides a reduction in the product production cost as well as reducing the weight of each terminal. On the top area (9.1) of the terminal which has a smaller internal diameter, the welding to the connection post would be carried out.

The essential nature of this invention is not altered by variations in materials, form, size and arrangement of the component elements, described in a non-restrictive manner, this being sufficient for an expert to proceed to the reproduction thereof.

## Claims

1. Sealed terminals for batteries, of among the terminals with projecting terminal posts which comprise a truncated conical part (1) external to the battery and a part (2) internal thereto with a labyrinth (3) of rings 3.1), there being a gradation (4) between the two (1, 2) areas, **characterized in that** they have at least one perimeter ring (5) of which the lower face (5.1) is perpendicular to the axis of the terminal having a greater external diameter than the diameter of the gradation (4).

2. Sealed terminals for batteries, according to claim 1, **characterized in that** the perimeter ring (5) has a pointed profile for its better penetration in the plastic.

3. Sealed terminals for batteries, according to claim 1, **characterized in that** the perimeter ring (5) has a straight profile.

4. Sealed terminals for batteries, according to claim 1, **characterized in that** the perimeter ring (5) is in contact with the gradation (4).

5. Sealed terminals for batteries, according to claim 1, **characterized in that** the perimeter rings (3.1) have a pointed profile.

6. Sealed terminals for batteries, according to claim 1, **characterized in that** the perimeter ring (5) has a circular section.

7. Sealed terminals for batteries, according to claim 1, **characterized in that** the gradation (4) has a profile formed by equidistant lobes (4.1).

8. Sealed terminals for batteries, according to claims 1 and 7, **characterized in that** the perimeter ring (5) has a lobed circular profile (5.2) parallel to that of the gradation (4).

9. Sealed terminals for batteries, according to claim 1, **characterized in that** there are two consecutive rings (5, 7) separated by a lobed gradation (6).

10. Sealed terminals for batteries, according to claim 1, **characterized in that** the bottom coupling of the terminal has a truncated conical profile (8.1) combined with a pointed perimeter ring (8.2).

11. Sealed terminals for batteries, according to claim 1, **characterized in that** the bottom coupling of the terminal has a cylindrical profile (8.3) combined with a perimeter projection (8.4).

12. Sealed terminals for batteries, according to claim 1, **characterized in that** they have an internal rebate (9).
